# NEW EUROPEAN PATENT SPECIFICATION

(11) **EP 3 425 234 B2**
(45) Date of publication and mention of the opposition decision: **24.09.2025**
(45) Mention of the grant of the patent: 05.05.2021
(21) Application number: 18163559.0
(22) Date of filing: 23.03.2018
(51) Int. Cl.: F16D 69/02

(54) **FERROUS BASED FRICTION MATERIAL**
REIBUNGSMATERIAL AUF EISENBASIS
MATÉRIAU DE FROTTEMENT À BASE FERREUSE

(30) Priority: 06.04.2017 US 201762482410 P; 13.03.2018 US 201815919294
(43) Date of publication of application: 09.01.2019
(73) Proprietor: Akebono Brake Industry Co., Ltd., Tokyo 103-8534 (JP)
(72) Inventor: Kesavan, Sunil, Novi, 48375 (US); Shao, Xinming, Bellevue, 98006 (US)
(74) Representative: Kutzenberger Wolff & Partner

(56) References cited:
- EP-A1- 1 233 203
- EP-A1- 1 482 204
- GB-A- 2 219 365
- US-B1- 6 190 761
- US-B1- 6 190 761

## Description

### FIELD

The present teachings relate to a ferrous metal based friction material composition and preferably a steel based friction material composition including lubricants that provides increased braking performance with a disc brake system or a drum brake system.

### BACKGROUND

The present teachings are predicated upon providing a friction material for use in a brake system (e.g., a disc brake system, a drum brake system, or a combination of both) for use with vehicles. For example, the brake system may be used with almost any vehicle (e.g. car, truck, bus, train, airplane, or the like). Alternatively, the brake system may be integrated into assemblies used for manufacturing or other equipment that require a brake such as a lathe, winder for paper products or cloth, amusement park rides, wind turbines, or the like. However, the present teachings are most suitable for use with a passenger vehicle (e.g., a car, truck, sports utility vehicle, or the like).

Generally, a braking system includes a rotor, a caliper body, a support bracket, an inboard brake pad, and an outboard brake pad that are on opposing sides of the rotor. Typically, the inboard brake pad, the outboard brake pad, and the rotor each include planar friction surfaces so that when the brake pads are in contact with the rotor a friction force is generated. The caliper body further includes one or more fingers, one or more piston bores, and a bridge that connects the one or more fingers to the piston bore or two opposing piston bores together. The piston bore houses a piston. The piston bore has a bore axis that the piston moves along during a brake apply and a brake retract. The piston bore may include a fluid inlet, a closed wall, a front opening, and a cylindrical side wall that includes a seal groove located near the front opening. Typically, the fluid inlet is located in the closed wall of the piston bore so that when pressure is applied the fluid will flow into the piston bore. During a pressure apply the fluid will push the piston towards the front opening and into contact with a brake pad that generally includes a pressure plate and friction material with a planar surface and the friction material will contact a planar surface of the rotor on one side and an opposing brake pad will contact the planar surface of the rotor on an opposing side creating friction to stop rotation of the rotor and any component connected to the brake system.

Another type of braking system includes two brake shoes in the hat of the rotor and/or drum so that when a braking force and/or parking brake force is desired the brake shoes are moved into contact with an inner surface of the hat of the rotor (e.g., a drum-in-hat brake system) and/or drum (drum brake system). Typically, brake shoes pivot on one end and have a link on an opposing end that separates the brake shoes so that the brake shoes are moved into contact with an opposing surface to generate a friction force. The link is connected to a pressure plate on each of the brake shoes so that friction material exposed on the pressure plates directly contacts a surface of the drum and/or hat to generate a friction force.

During these friction events the friction members (e.g., brake pad or brake shoe) contacts a moving part (e.g., rotor or drum respectively) and the friction material gradually slows the moving part until a complete stop is achieved. During the contact between the friction material and the moving part wear occurs so that a portion of the friction material, moving part, or both gradually becomes worn over time. The speed at which the friction material and moving part wear may be increased or decreased based upon the composition of each. The composition of the friction material may be adjusted to increase one property which may result in a decrease in another property. These properties may be balanced in order to provide a friction material that achieves predetermined braking characteristics.

Examples of some friction materials are disclosed in U.S. Patent Nos. 5,339,931 and 6.190761; U.S. Patent Application Publication No. 2013/0037360, European Patent EP 1 233 203A1 and European Patent No. EP1194705. What is needed is a friction material that provides a high level of braking without deteriorating and/or deteriorating the moving parts such as the rotor. What is needed is an improved friction material that uses steel to generate a high level of friction without creating a large amount of brake dust or brake powder. It would be attractive to have a friction material that includes a lubricant to counteract the high mu of the steel and abrasives. Further reference can be made to EP 1 482 204 A1 and GB 2 219 365 A.

The invention relates to: A friction material comprising: (a) at least one metal containing constituent, wherein the at least one metal containing constituent includes a ferrous metal; (b) one or more lubricating components present in an amount from about 2 to about 30 percent by weight of the friction material, the one or more lubricating components including: one or more lubricants that are a non-carbonaceous lubricant and (i) a molybdate or an alkali metal molybdate; (ii) a tungsten containing compound; (iii) a zinc sulfide; (iv) a fluoride and metal containing compound; (v) alkali earth metals which are magnesium, calcium, or both that are combined with a phosphate, sulfate, or both; (vi) or a combination of (i) through (v); (c) one or more filler materials; (d) optionally at least one processing aid; (e) an organic binder; and wherein the friction material is free of asbestos and substantially devoid of copper. Any subject-matter not covered by the claims serves information purposes.

The present teachings provide a friction material that provides a high level of braking without deteriorating and/or deteriorating the moving parts such as the rotor. The present teachings provide an improved friction material that uses steel to generate a high level of friction without creating a large amount of brake dust or brake powder. The present teachings provide a friction material that includes a lubricant to counteract the high mu of the steel and abrasives.

### BRIEF DESCRIPTION OF THE DRAWINGS

FIG. 1 is a cross-sectional perspective view of a brake system;
FIG. 2 is a perspective view of a brake pad including friction material; and
FIG. 3 is an exploded view of a drum brake system including brake shoes.

### DETAILED DESCRIPTION

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the teachings. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The teachings herein relate to one or more improved friction members that work in unison to provide improved braking performance. The one or more friction members may be two or more complementary friction members that are moved into contact to form a brake apply. The one or more friction members may be a brake pad, a brake shoe, or both. The one or more friction members when installed in a system preferably include one or more movable members (e.g., a rotational member) and one or more friction members that are complementary to each other to create a friction force. The movable members may be a rotor, a drum, a hat of a rotor, or a combination thereof. The friction members may be a brake pad, a brake shoe, or both. The one or more friction members may be installed in a brake system. The brake system may be a disc brake system, a drum brake system, a drum-in-hat brake system, or a combination thereof. The brake systems taught herein may include one or more brake pads or brake shoes, preferably two or more brake pads or shoes, and even a plurality of brake pads or shoes.

The brake pads, brake shoes, or both (hereinafter friction members) function to create a braking event. The friction members may function to move from a running state to an apply state so that a friction force is created. Each friction member may include a friction plate and a friction material.

The pressure plate may function to connect to a friction material so that a braking force may be created, the pressure plate may connect the pressure member to a brake system, the pressure plate may move the friction material so that a braking force is generated, or a combination thereof. The pressure plate may provide support for the friction material, provide a point of contact with other brake components, a point for moving the brake pad to create a brake apply, or a combination thereof. The pressure plate may be made of any material so that the pressure plate provides support to friction material, assists in producing a friction force during braking, or both. The pressure plate may be made of metal, a formable material, a stampable material, a composite material, a material with sufficient rigidity to provide support to a friction material during a braking event, or a combination thereof. The pressure plate may have a complementary shape to the friction material, the pressure plate may be flat, arcuate, have a flat surface and be generally arcuate, include one or more recesses for receiving a connector, include one or more recesses for receiving friction material, or a combination thereof. The pressure plate may include one or more connection features so that the pressure plate may be included in a brake system. However, the friction material may be free of a pressure plate.

The friction material may function to assist in creating a braking force. The friction material functions to create a predetermined amount of friction. The friction material may contact a movable member and reduce, eliminate, or both movement of the movable member. The friction material may function to be a point of contact between the pressure member and a movable member (e.g., a rotor, drum, rotational member). The friction material may be applied to the pressure plate using any method and/or material. The connection between the friction material and the pressure plate may be a mechanical connection (e.g., a rivet, a projection, a bolt, a fastener, peened, the like, or a combination thereof), a chemical connection (e.g., adhesive, epoxy, bonding agent, the like, or a combination thereof), or a combination of both. The friction material may be pressed onto the pressure plate to form a connection. The friction material may be asbestos free, copper free, or both. The friction material may include basalt fibers. The friction material may be compressed materials that are connected to a pressure plate. Preferably, the friction material is a composite of different materials that are compressed together to form a friction material. The composite material may include one or more lubricants, one or more lubricating components, one or more functional lubricants, one or more metal containing constituents, one or more micro-particulated materials, one or more filler materials, one or more processing aids, one or more binders, one or more modifiers, or a combination thereof.

The one or more lubricating components may include one or more functional lubricants, one or more lubricants, one or more lubricant modifiers, or a combination thereof. The one or more lubricating components may include one or more functional lubricants that may function to enhance lubricants and preferably carbon based lubricants. The one or more lubricating components or a lubricant modifier may include components that function as a functional filler. The one or more lubricating components may function as both a functional filler and a lubricant when used in conjunction with ferrous materials and thus may be referred to as a functional lubricant. For example, the functional lubricants may enhance the lubricating characteristic of the lubricant while also providing some abrasive characteristics.

The one or more lubricants may be a dry lubricant, a solid lubricant, or both. The one or more lubricants may be a liquid lubricant or may be provided in liquid form. The one or more lubricants may have a layered structure. The one or more lubricants may have a non-layered structure. The amount of lubricant selected may be sufficient to help minimize noise during standard braking conditions due to contact between a friction material and a movable member. A sufficient amount of lubricant is added so that a noise of about 50 dB or less is created as measured by a simulated L.A. city traffic test. By way of example, the lubricant may be present in an amount about of at least about 1, 2, 3, 4, 5, or 6 percent by weight of the friction material but in an amount not to exceed 15, 12, or 10 percent by weight of the friction material. If the lubricant is coke the coke may be present in an amount of about 1 to 15 percent by weight and more preferably about 2 to 10 percent by weight. Preferably, the lubricant may be coke, petroleum coke, tin sulfide, graphite, natural graphite, synthetic graphite, resilient graphite, a nano-graphite, a coarse graphite, a coarse synthetic graphite, or a combination thereof. Preferably, the lubricant will include either a natural graphite or a synthetic graphite.

The particle size of the lubricant may function to control compressibility of the brake pad. The lubricant may be provided in a form of a plurality of individual discrete elements (e.g., as powder particles, fibers, flakes, or other elements), either or both may be provided as having a maximum element size when subjected to sieve testing of no greater than about 1000 microns, preferably about 750 microns, or more preferably about 500 microns measured using a sieve analysis. The lubricant may have a particle size ranging from about 1 micron to about 2500 microns, preferably from about 5 microns to about 1000 microns, and more preferably about 10 to about 500 microns measured using a sieve analysis. Most preferably the lubricant may have a particle size ranging from about 200 microns to about 450 microns. The lubricant may have a particle size distribution where the median particle size when sieve testing, by weight, is between about 250 microns to about 350 microns. The lubricant may be present in the friction material at an amount of about 8 percent, about 10 percent by weight or more, about 12 percent by weight or more, about 15 percent by weight or more, or even about 18 percent by weight or more of the friction material. The lubricant may be present in the friction material in an amount of about 40 percent by weight or less, about 35 percent by weight or less, or about 25 percent by weight or less (i.e., between about 8 percent and about 30 percent). The lubricant may be a combination of one or more materials and is preferably a plurality of different materials.

The lubricant may be one or more graphitic materials. For example, the lubricant may be a natural graphite, a synthetic graphite, a combination of a natural graphite and a synthetic graphite (about 2 to about 6 parts by weight of natural graphite to about 6 to about 12 parts by weight synthetic graphite (e.g., about 4 to 9)). Either or both of the natural graphite or the synthetic graphite may be provided in a form of a plurality of individual discrete elements (e.g., as powder particles, fibers, flakes, or other elements), either or both may be provided as having a maximum element size when subjected to sieve testing of no greater than about 2500 microns, about 1000 microns, preferably about 750 microns, or more preferably about 500 microns. Natural graphite may have a particle size ranging from about 1 micron to about 1000 microns, preferably from about 5 microns to about 750 microns, and more preferably about 10 to about 500 microns measured using a sieve analysis. When a natural graphite is used about 20 percent or more, about 30 percent or more, 40 percent or more, or even about 50 percent by weight of the total amount of graphite has a particle size of about 500 microns or greater measured by sieve analysis. The graphite may have a particle size distribution where the median particle size when sieve testing, by weight, is between about 250 microns to about 350 microns. The graphite may be a coarse graphite and may have a particle size distribution of between about 300 microns and about 500 microns using sieve analysis. The graphite may be a medium graphite and may have a particle size distribution between about 100 microns and about 300 microns using sieve analysis. The graphite may be a fine graphite and may have a particle size distribution of about 10 microns and about 75 microns using sieve analysis. The synthetic graphite may have a particle size of about 500 microns or more but less than about 2500 microns, or less than about 2000 microns using a sieve analysis that are present in an amount of about 10 percent or more, about 20 percent by weight or more, or about 30 percent by weight or more of the total lubricant. The synthetic graphite may have a particle size of about 500 microns or more but less than about 2500 microns, or less than about 2000 microns using a sieve analysis that are present in an amount of about 80 percent or less, about 70 percent by weight or less, or about 60 percent by weight or less of the total lubricant. The natural graphite may have a particle size of between about 5 microns and 1000 microns, and preferably between about 10 microns and about 500 microns using a sieve analysis. Either or both of the natural or synthetic graphite may be regarded as a resilient graphite. The resiliency of a graphite may be about 80% or more, about 90% or more, preferably about 100% or more, about 120% or more, or even about 140% or more. The resiliency of a graphite may be about 200% or less, about 180% or less, or about 160% or less (i.e., preferably between about 100% and about 150%). Resiliency of the graphite is measured by compressing the graphite at a pressure of between about 5,000 kPa to 70,000 kPa and the amount of spring back versus the original shape is measured. The resilient graphite may have a porosity of about 1.0 g/cc or more, about 1.2 g/cc or more, or even about 1.4 g/cc or more. The resilient graphite may have a porosity of about 3.0 g/cc or less, about 2.5 g/cc or less, about 2.0 g/cc or less, or even about 1.8 g/cc or less. The resilient graphite may have a bulk density of about 100 Kg/m³ or more, about 150 Kg/m³ or more, or about 200 Kg/m³ or more. The resilient graphite may have a bulk density of about 600 Kg/m³ or less, about 500 Kg/m³ or less, or preferably about 450 Kg/m³ or less. The resilient graphite may be present in the friction material in a sufficient amount so that the friction material is compressible to dissipate energy during a braking event. Examples of suitable commercial grades of lubricant are sold under the tradename RGC14A from Superior Graphite. The resilient graphite may be one of several lubricant components within a friction material. The one or more lubricants may be modified, enhanced, or both by one or more functional lubricants as taught herein.

The one or more functional lubricants may function to modify a lubricant, enhance a lubricant, act as a lubricant, or a combination thereof. The one or more function lubricants may be present in an amount from about 0.5 percent or more, about 1 percent or more, about 1.5 percent or more, or about 2 percent or more by weight. The one or more functional lubricants may be present in an amount from about 10 percent or less, about 8 percent or less, or about 6 percent or less by weight. The one or more functional lubricants may include one or more atoms selected from, zinc, molybdenum, tungsten, sulfur, carbon, boron, and fluorine. The one or more functional lubricants are non-carbonaceous. Preferably, at least one of the one or more functional lubricants is a non-carbonaceous. More preferably, two or more of the functional lubricants are non-carbonaceous functional lubricants. Even more preferably, three or more of the functional lubricants are non-carbonaceous functional lubricants. The one or more functional lubricants may be a non-carbonaceous metal containing compound. The one or more functional lubricants may be a lubricant modifier. The lubricant modifiers may enhance a function of a carbonaceous lubricant or a sulfide functional lubricant. The lubricant modifiers may assist the carbonaceous lubricant or sulfide functional lubricants to form a transfer film on a rotor or drum during a braking event. The one or more functional lubricants may include a metal. The one or more functional lubricants may include an alkali metal, an alkaline earth metal, or both. The one or more functional lubricants may include molybdenum, tungsten, or both. The one or more functional lubricant may be a molybdate. The one or more functional lubricants may be an alkali metal and molydbate. The functional lubricants may be molybdenum disulfide. The one or more functional lubricants may be a tungstate. The one or more functional lubricants may be an alkali metal and tungstate. The molydbate, tungstate, alkali metal molydbate, alkali metal tungstate, or a combination thereof may be present in an amount of about 0.1 percent by weight or more, about 0.2 percent by weight or more, about 0.5 percent by weight or more, or about 1 percent by weight or more of the friction material. The molydbate, tungstate, alkali metal molydbate, alkali metal tungstate, or a combination thereof may be present in an amount of about 15 percent by weight or less, about 10 percent by weight or less, about 8 percent by weight or less, or about 7 percent by weight or less of the friction material (e.g., in a range from about 0.2 percent by weight to about 7 percent by weight of the friction material).
According to the invention, the one or more lubricating components may include a molybdate or an alkali metal molybdate.

The one or more functional lubricants may be zinc sulfide. The zinc sulfide may be present in an amount of about 0.2 percent by weight or more, about 0.5 percent by weight or more, about 0.8 percent by weight or more, or about 1.1 percent by weight or more of the friction material. The zinc sulfide may be present in an amount of about 12 percent by weight or less, about 10 percent by weight or less, about 7 percent by weight or less, or about 6 percent by weight or less of the friction material (e.g., in a range from about 0.5 percent by weight to about 6 percent by weight of the friction material).

The one or more functional lubricants may include a fluoride and metal containing compound. The metal present with the fluoride may be calcium, potassium, aluminum, or a combination thereof. Preferably. the fluoride and metal containing compound is calcium fluoride, potassium aluminum fluoride, or both. The fluoride and metal containing compound may be present in an amount of about 0.1 percent by weight or more, about 0.2 percent by weight or more, about 0.5 percent by weight or more, or about 0.75 percent by weight or more of the friction material. The fluoride and metal containing compound may be present in an amount of about 15 percent by weight or less, about 12 percent by weight or less, about 10 percent by weight or less, or about 8 percent by weight or less of the friction material (e.g., in a range from about 0.2 percent by weight to about 7 percent by weight of the friction material).

The one or more functional lubricants include one or more alkali earth metals that are combined with a phosphate, a sulfate, or both. The one or more alkali earth metals are Magnesium, Calcium, or a combination thereof. Preferably the functional lubricants may include tricalcium phosphate.

The functional lubricant may include one or more metal sulfides. The functional lubricant may be or include antimony sulfide, tin sulfide, tungsten sulfide, bismuth sulfide, iron sulfide, manganese sulfide, or a combination thereof. The antimony sulfide when present may be present in an amount of about 1 percent or more, about 2 percent or more, about 3 percent or more, about 4 percent or more, or even about 5 percent by weight of the friction material. The antimony sulfide may be present in an amount of about 10 percent by weight or less, about 7 percent by weight or less, or about 5 percent by weight or less of the friction material (i.e., about 4 percent by weight). The friction material may be free of antimony sulfide, tin sulfide, or both. The antimony sulfide may have a particle size of about 1 micron or more, about 5 microns or more, or about 10 microns. The antimony sulfide may have a particle size of about 100 microns or less, preferably about 75 microns or less, or more preferably about 45 microns or less. The friction material may include at least one metal containing constituent that works with the lubricant and functional lubricant during a braking event.

The friction material includes at least one metal containing constituent. The at least one metal containing constituent may be an abrasive. The at least one metal containing constituent may have abrasive characteristics (e.g., other materials such as a functional filler may also have abrasive characteristics). The metal containing constituents may be a mineral that includes metal, an oxide, a pure metal, or a combination thereof. The metal containing constituents may be naturally occurring, synthetic, or both. The metal containing constituents may be a fiber, a powder, flake, or a combination thereof. Preferably, the metal containing constituent may be in the form of fibers (e.g., a mineral fiber). The fibers may be extruded, melt-spun, chopped, shaved, cut, or formed into a predetermined size (e.g., length). The metal containing constituents may be a powder with a particle size of about 40 microns or less, preferably about 20 microns or less, more preferably about 10 microns or less (e.g., between about 10 microns and 1 micron). The metal containing constituent may include magnesium, magnesium oxide, aluminum, aluminum oxide, a metal containing mineral fiber, iron, basalt, chromium oxide, iron chromite, or a combination thereof. When basalt is used the basalt may include magnesium oxide, aluminum oxide, or both. The metal containing constituent may be calcium silicate and preferably synthetic calcium silicate. Preferably, iron is the greatest amount of metal containing constituent. The iron may be iron pyrite. The iron may be in the form of fibers. The fibers may be extruded, chopped, shaved cut, or formed into a predetermined size. The iron may be a powder. The iron may be a porous iron powder (i.e., have a microstructure that includes pores). The pure iron constituent to powder constituent may have a ratio. The ratio of pure iron to iron powder may be about 1:1 or more, 2:1 or more, about 3:1 or more. The ratio of pure iron to iron powder may be about 1:2 or more or about 1:3 or more. All of the iron may be pure iron (i.e., 100 percent), all of the iron may be an iron powder (i.e., 100 percent). The iron may be a magnetic iron oxide (e.g., magnetite).

When magnetite is present the magnetite may be present in an amount of about 4 percent by weight or more, 6 percent by weight or more, about 8 percent by weight or more, 10 percent by weight or more, 12 percent by weight or more, or even about 15 percent by weight or more of the total weight of the friction material. When magnetite is present the magnetite may be present in an amount of about 22 percent or less by weight, about 20 percent or less by weight, or preferably about 17 percent by weight or less of the total weight of the friction material. The iron may be Fe fiber, Fe₂O₃, Fe₃O₄, or a combination thereof. A ratio of iron to iron containing compounds may be present in the friction material of about 1:1 or more, about 1:2 or more, about 1:3 or more, or even about 1:4 or more. The ratio of iron to iron containing compounds may about 1:1 or less, about 1:0.5 or less, or about 1:0.33 or less. For example, the iron to iron containing compound may be present in an amount of about 1:1.25 and in another example, the ratio of iron to iron containing compound may be about 1:0.66.

The metal containing constituent may not be copper, bronze, or a copper containing component. The metal containing constituent is a substantially copper free (i.e., about 0.5 percent by weight or less). The metal containing constituent may be substantially devoid of copper (i.e., about 5 percent by weight or less, and preferably 2 percent by weight or less) (i.e., about 0 percent by weight copper). Preferably, the metal containing constituent includes zero copper by weight of the total weight of the friction material.

The metal containing constituent may include steel. The metal containing constituent may include a ferrous metal. The friction material may include stainless steel. The friction material may include steel that has a Rockwell hardness of about 70N or less, about 65N or less, or even about 60N or less on the Rockwell HRC scale of hardness. The ferrous metal, steel, or both may be a powder, a porous powder, flakes, fibers, or a combination thereof. The metal containing constituent may be a ferrous fiber. When the metal containing constitute is in the form of fibers, the fibers may have a length of about 10 microns or more, about 25 microns or more, about 50 microns or more, or preferably, about 100 microns or more. The fibers may have a length of about 300 microns or less, about 2500 microns or less, about 2000 microns or less, or preferably about 1500 microns or less (e.g., the length may be in the range from about 100 microns to about 1400 microns). The ferrous metal (e.g., steel) may be stainless steel, 304 stainless steel, 316 stainless steel, carbon steel, a porous powder stainless steel, a high thermal conductivity steel (e.g., a steel with a higher conductivity than carbon steel), or a combination thereof. The ferrous metal (e.g., steel) may include chromium, nickel, tungsten, cobalt, manganese, aluminum, carbon, copper (when copper is present in the steel the copper is less than 1% by mass the total composition of the steel), molybdenum, phosphorous, sulfur, silicon, or a combination thereof. The ferrous metal (e.g., steel) may be present in an amount of about 10 percent by weight or more, about 15 percent by weight or more, or about 30 percent by weight or more. Different types of ferrous metals (e.g., steel) may be used in combination. Stainless steel and carbon steel may be used together. If carbon steel and stainless steel are used together they may be present in a ratio of amounts. The friction material may be free of carbon steel or stainless steel. The friction material may include both carbon steel and stainless steel. The friction material may include equal parts carbon steel and stainless steel. The friction material may include varying amounts of carbon steel (e.g., about 30 percent carbon steel and about 70 percent stainless steel). The stainless steel may be a stainless steel powder. Preferably, the stainless steel may be stainless steel fibers.

The one or more metal containing constituents (i.e., total amount of metal containing constituents in the friction material) may be present in the friction material in an amount of about 10 percent by weight or more, about 15 percent by weight or more, preferably about 25 percent by weight or more, more preferably about 30 percent by weight or more, or even more preferably about 32 percent by weight or more. The one or more metal containing constituents (i.e., total amount of metal containing constituents in the friction material) may be present in the friction material in an amount of about 55 percent by weight or less, about 50 percent by weight or less, or about 45 percent by weight or less. The one or more metal containing constituents may be present in a sufficient amount so that under normal braking conditions the friction material has a coefficient of friction of about .3 or more, about .35 or more about .4 or more, about .45 or more, or even about .5 or more. The one or more metal containing constituents may be present in a sufficient amount so that under normal braking conditions the friction material has a coefficient of friction of about .75 or less, preferably about .65 or less, more preferably about .55 or less. The friction material may include a sufficient amount of metal containing constituents that the friction material has a Rockwell hardness of about 85 N or less the Rockwell HRC scale of hardness. The metal containing constituents may have a Rockwell hardness of about 105 N or less, preferably about 100 N or less, more preferably about 95 N or less, or even about 90 N or less the Rockwell HRC scale of hardness.. The metal containing constituents may have a Rockwell hardness of about 60 N or more, about 65 N or more, about 75 N or more, or even about 85 N or more the Rockwell HRC scale of hardness. The friction material may include a sufficient amount of metal containing constituent so that the thermal conductivity of the friction material is about 2 W/mK or more, about 3 W/mK or more, about 5 W/mK or more, or even about 7 W/mK or more. The friction material may include a sufficient amount of metal containing constituent so that the thermal conductivity of the friction material is about 20 W/mK or less, preferably about 15 W/mK or less, or more preferably about 10 W/mK or less. The metal containing constituents may be used in conjunction with non-metal containing constituents that provide abrasive characteristics.

The abrasives may include aluminum oxide, chromium oxide, iron chromite, magnesium oxide, silicon carbide, zirconium silicate, monoclinic zirconia, zirconia, or a combination thereof. For example, the metal oxide may be iron oxide, aluminum oxide, chromium oxide, iron chromite oxide, magnesium oxide, or a combination thereof. For example, the metal carbide may be silicon carbide. In another example, a silicate may be present that is a zirconium silicate, calcium silicate, or both.

The friction material may include one or more micro-particulated materials. A sufficient amount of micro-particulated materials may be present in the friction material to prevent the friction material from sticking to other metallic components (e.g., disc or drum). Preferably, the micro-particulated materials are present in a sufficient amount to prevent or inhibit galvanic corrosion so that the friction material does not oxidize, the brake components do not stick together, or both. For example, when the brake is used as a parking brake and the friction material is moved into contact with a drum or rotor and maintained in that position for an extended amount of time the micro-particulated materials inhibit the friction material from sticking to the drum or rotor so that upon the parking brake release free movement is restored. The micro-particulated material may be a multi-functional material. The micro-particulated material may provide friction (i.e., increase the coefficient of friction), provide hardness, resist in corrosion, or a combination thereof. The micro-particulated material may resist corrosion in one or more of the metal containing constituents. The micro-particulated material may provide the same function as the metal containing constituent (i.e., friction) as well as inhibit corrosion. The micro-particulated material may include 1, 2, 3, 4, or more metals that may form a compound. The micro-particulated material may include a phosphate or a silicate. The micro-particulated material may be an oxygen containing compound. The micro-particulated material may be a mineral (i.e., natural, synthetic, or both). Preferably, the micro-particulated material is a zinc containing compound, zinc, or both. More preferably, the micro-particulated material is a substantially pure metal (i.e., has metal impurities in an amount of about 100 ppm or less). For example, the micro-particulated material is substantially pure zinc metal powder (e.g., zinc powder). The micro-particulated material may be a tin powder. The micro-particulated material may include at least one metal selected from zinc, calcium, or molybdenum and is in the form of an oxygen containing compound (e.g., oxide or phosphate). The micro-particulated materials may be a zinc aluminum orthophosphate. The micro-particulated materials may be a zinc aluminum orthophosphate hydrate, zinc orthophosphate hydrate, a zinc calcium strontium aluminum orthophosphate silicate hydrate, a zinc phosphomolybdate, or a combination thereof. An example of a commercially available micro-particulated material is sold under the trade name Heucophos^{®} ZPA by Heubach. The micro-particulated material may have a particle size of about 500 microns or less, preferably about 250 microns or less, more preferably about 100 microns or less. The micro-particulated material may have a particle size of about 50 microns or less, preferably about 40 microns or less, preferably about 25 microns or less, or more preferably about 15 microns or less. The micro-particulated material may be present in an amount of about 0.1 percent by weight or more, about 0.3 percent by weight or more, about 0.5 percent by weight or more, or even about 1 percent by weight or more of the friction material. The micro-particulated material may be present in an amount of about 2 percent by weight or more, about 3 percent by weight or more, about 5 percent by weight or more, or even about 7 percent by weight or more of the friction material. The micro-particulated material may be present in an amount of about 25 percent by weight or less, about 20 percent by weight or less, about 15 percent by weight or less, or preferably about 10 percent by weight or less of the friction material (i.e., in an amount of between about 0.3 percent by weight and 10 percent by weight).

The one or more filler materials may be present in a sufficient amount so that the fillers enhance friction, reduce noise, improve wear, or a combination thereof. The friction material may include a sufficient amount of filler so that the fillers affect the pore size distribution of the pad so that gases, fluids, or both can freely move in or out of the friction material during a braking event. The fillers may provide porosity, compressibility, an area of reduced density, or a combination thereof. The fillers may be softer than the other constituents of the friction material so that during a braking event the fillers allow the brake pad to compress. The volume of the fillers may be reduced during a braking event and so that the friction material has an altered compressibility. The fillers may conduct heat, extend from one side of a crack in the friction material to a second side of a crack in the friction material, prevent brittleness in the friction material, provide strength to the friction material upon repeated thermal cycling so that the friction material does not have thermal brittleness, or a combination thereof. The fillers may be an inorganic filler, an organic filler, or both. The fillers may be a barite (baryte), calcium carbonate, titanium dioxide, rubber, tire tread dust, cashew dust, ceramic fiber fillers, graphite, wollastonite, rockwool, perlite, vermiculite, xonotlite, a titanate, or a combination thereof. The organic fillers may include cashew dust, rubber dust, or both. The inorganic fillers may include barite, calcium carbonate, titanium dioxide, ceramic fiber fillers, mica, wollastonite, rockwool, perlite, vermiculite, xonotlite, titanate, or a combination thereof. The fillers may be free of antimony compounds, titanium dioxide, a titanate, or a combination thereof. Preferably, the fillers are free of ceramic fillers having a particle size of about 1 micron or less and preferably is free of nanoparticles. More preferably, the fillers are not a bioinsoluble ceramic fiber (i.e., the friction material is free of bioinsoluble ceramic materials). The friction materials may be free of SiO₂, Al₂O₃, Al₂-SiO₂, Al₂O₃-SiO₂-ZrO₂, or a combination thereof. Preferably, the friction material is free of fillers that are bioinsoluble fibers or nanoparticles. The one or more fillers may be a functional filler, a non-functional filler, or both.

Preferably, the friction material includes at least one non-functional filler. The friction material may include at least one functional filler. The non-functional filler may be a barite (baryte), calcium carbonate, vermiculite, or a combination thereof. The non-functional fillers may not change the hardness, coefficient of friction, or both. For example, the non-functional fillers may not change the hardness of the friction material or be hard enough so that during a braking event the fillers assist is braking a moving member. In another example, the non-functional fillers may not increase the coefficient of friction or contribute to the coefficient of friction of the friction material. The non-functional fillers may be used in conjunction with functional fillers. The non-functional fillers may not have any effect on the functional fillers.

The functional fillers may have a sufficient hardness that the fillers create friction. The functional fillers may contribute to the braking characteristics of the friction material. The functional fillers may increase the coefficient of friction or have a hardness that changes the coefficient of friction of the friction material. Functional fillers may be titanium dioxide, rubber dust, cashew dust, sodium molybdate, calcium fluoride (e.g., functional lubricant), zinc powder, a titanate, a metatitanate, octatitanate, or a combination thereof. The titanate may be a potassium hexatitanate powder, strontium titanate, lithium titanate, barium titanate, barium sulfate, aluminum titanate, sodium titanate, calcium titanate, potassium titanate, or a combination thereof. Preferably, the friction material is free of a titanate. The fillers may be present in an amount of about 1 percent by weight or more, about 5 percent by weight or more, about 10 percent by weight or more, or about 15 percent by weight or more. The fillers may be present in an amount of about 75 percent by weight or less, preferably about 60 percent by weight or less, or about 50 percent by weight or less of the friction material (i.e., between about 5 percent by weight to about 60 percent by weight). The functional filler may comprise about 40 percent by weight or more, about 50 percent by weight or more, about 60 percent by weight or more, or preferably about 65 percent by weight or more of the total weight of the filler (i.e., the non-functional filler may be about 33 percent by weight and the functional filler may be about 67 percent by weight of the total weight of filler).

The friction material may include one or more processing aids. The processing aids may be present in a sufficient amount so that the processing aids create entanglement within the friction material in a green state. The processing aids may create mechanical entanglement when the friction material is in the green state, a cured state, or both. The processing aids may bind the friction material, bind the materials of friction material, or both when the friction material is in the green state. The processing aid may be a fibrous reinforcement. The processing aids may be aramid pulp, cellulose pulp, acrylic pulp, or a combination thereof. The processing aids may be present in an amount of about 1 percent by weight or more, about 5 percent by weight or more, about 10 percent by weight or more, or even about 12 percent by weight or more. The processing aids may be present in an amount of about 20 percent by weight or less, about 15 percent by weight or less, or even about 12 percent by weight or less of the friction material (i.e., between about 3 percent by weight and about 10 percent by weight). The friction material may include one or more pH modifiers.

The one or more pH modifiers may function to adjust the pH of the friction material. The pH modifier function to modify the friction material to be alkaline. The pH modifier may modify the friction material to have a pH of about 9 or more, about 10 or more, about 11 or more, or preferably about 11.5 or more. The pH modifiers may be calcium hydroxide, trisodium phosphate, or both.

Binder may function to combine together and hold together the one or more materials of the friction material in a green state, a cured state, or both. The binder may function to resist wear during a braking event. The binder may prevent degradation of the friction material due to contact with the environment, with a moving member, or both. The binder may assist in creating a braking force, a braking event, or both. The binder may be a phenolic resin. The binder may be an organic binder. The binder may be present in an amount of about 6 percent or more, about 7 percent or more, about 8 percent or more, or even about 9 percent or more by weight of the total weight of the friction material (i.e., a range from about 8 percent to about 11 percent by total weight of the friction material). The binder may be present in an amount of about 18 percent or less, about 15 percent or less, or about 12 percent or less. 8The binder may be a phenolic resin. The binder may be substantially free of free phenol (i.e., less than about 1 percent by weight of the organic binder in a green state, in a cured state, or both is a free phenol). The binder may be substantially free of formaldehyde (i.e., less than about 1 percent by weight of the organic binder in a green state, in a cured state, or both is formaldehyde). The free phenol, the formaldehyde, or both may be present in an amount of about 0.5 percent by weight or less of the organic binder. Preferably, the binder is free of free phenol, formaldehyde, or both (i.e., not even trace amounts are found in the friction material). Examples of commercially available low phenol resins are available from the Hexion Corporation under the tradenames Durite FD-900A and Cellobond J1011H.

The lubricants may be all be pre-mixed together before mixing with other ingredients. The remaining materials and the pre-mixed materials may be combined together by mixing the ingredients in a mixer (e.g., Lodige, Littleford, Eirich, MTI mixer (or a ball mill or attritor)) for about 4 minutes, while taking care to prevent clumping, balling, or an agglomeration of ingredients. The pH of the ingredients may be adjusted before or during mixing. The pH may be adjusted to about 9.5 or more, about 10 or more, about 10.5 or more, about 11 or more, or even about 11.5 or more. The pH may be adjusted to be about 14 or less or about 13 or less. The ingredients are moved from the mixer into a die that is room temperature to pre-form the ingredients creating a frictional material or the ingredients are loosely filled into a heated mold in a green state. The ingredients, in a green state, are moved from the die into a hot die where the friction material is pressed at about 20 KPa and heated until the melting of the resin is achieved. The friction material once heated to melt the resin is maintained under this state of heat and pressure from 2 to 5 minutes forming a cured near net shape part. The cured near net shape part is then placed in a post cure oven to completely cure oven at about 250 °C for about 3 hours. Subsequently, the cured pads are finish ground to dimensions and subjected to additional surface heat treatment if needed.

The friction material is tested for resulting physical characteristics. The friction material is then tested for performance (i.e., coefficient of friction of the friction material), wear life, noise, brake torque variation, and corrosion stiction test. The corrosion stiction test is performed as per JIS D4414 to identify if the friction material sticks to the drum or rotor when maintained in a closed position.

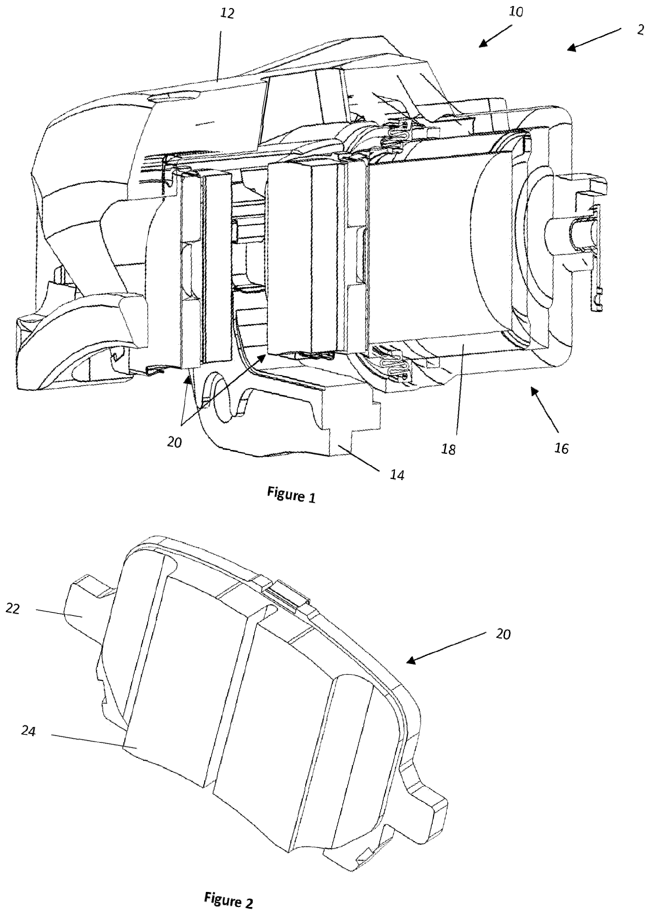

Figure 1 illustrates a brake system 2 that is a disc brake system 10. The disc brake system 10 includes a caliper 12 and a support bracket 14 that connects the caliper 12 to a component that needs braking such as a vehicle (not shown). The caliper 12 includes a piston bore 16 and a piston 18 that moves within the piston bore 16. A pair of opposing brake pads 20 are located within the disc brake system 10.

Figure 2 is a perspective view of a brake pad 20 including a pressure plate 22 and friction material 24.

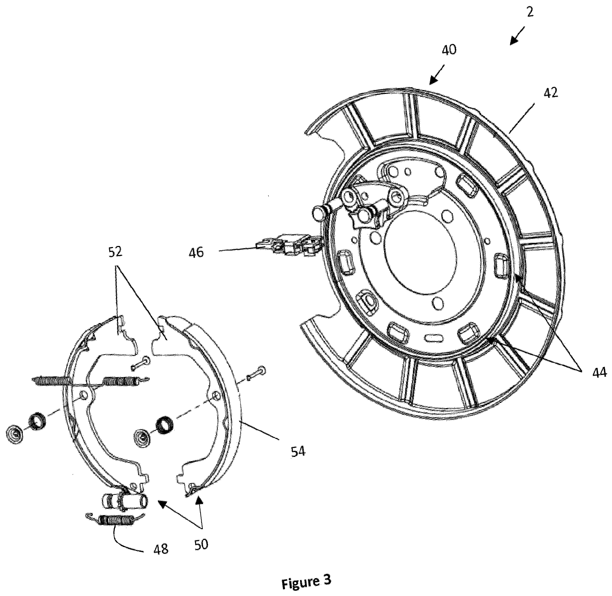

Figure 3 illustrates an exploded view of a drum brake 40. The drum brake 40 includes a support plate 42 with lands 44 that assist in connecting the brake shoes 50 within a component that needs braking such as a vehicle (not shown). The brake shoes 50 are connected at a top end by a link 46 that moves and a bottom end by a spring 48 that also permits the brake shoes 50 to move. The brake shoes 50 include a pressure plate 52 and friction material 54.

### EXAMPLES

| | A | B | C | D | E | F | G | H | I | J | K | L | M | N |
|---|---|---|---|---|---|---|---|---|---|---|---|---|---|---|
| Phenolic Resin | 9 | 9 | 7.5 | 8 | 9.5 | 8 | 10 | 9 | 8 | 8 | 8 | 8 | 8 | 8 |
| Rubber Dust | 2 | 2 | 2 | 2 | - | 2 | 1 | 3 | 4 | 2 | 3 | 2 | 2 | 2 |
| Cashew Dust | 2 | 2 | 2 | 3 | 4 | 3 | 4 | 2 | 3 | 2 | 2 | 2 | 4 | 4 |
| Petroleum Coke | 12 | 8 | 13 | 6 | 9 | | 7 | | 5 | - | 13 | 6 | | 3 |
| Tin Sulfide | | 3 | 4 | 4 | 2.5 | 4 | - | | 3 | 4 | 4 | 4 | 4 | 3 |
| Molybdenum disulfide | 4 | 3 | - | 3 | - | 2 | 5 | 1 | 2 | | 3 | 4 | 3 | 3 |
| Potassium hexatitanate powder | - | - | 9 | | 10 | - | | 6 | | | - | - | | |
| Zinc Aluminum Orthophosphate hydrate | 5 | - | 5 | 5 | 6 | 6 | 5.5 | 1 | 1 | - | 6 | 4 | 4 | 6 |
| Aramid pulp | 3 | 4 | 3 | 3 | 3.5 | 3 | 5 | 2 | 4 | 4 | 3 | 4 | 3.5 | 3 |
| Zinc powder | 4.5 | 6 | 5 | 4 | 5 | 3 | 7 | 6 | 3 | 7 | 4 | 5 | 5 | 6 |
| Ferrous fiber | 30 | 28 | 30 | 30 | 29 | 30 | 26 | 31 | 29 | 28 | 31 | 30 | 33 | 27 |
| Magnetite | 5 | 4 | 6 | 4 | | 7 | 6 | 9 | 8 | 3 | | 4 | - | 3 |
| Coarse synthetic Graphite | 6 | 4 | 6 | 6 | 5 | 5 | 9 | 2 | 9 | 13 | 4 | 5 | 4 | 3 |
| Resilient Graphite | | 6 | | 6 | 3 | 4 | 2 | 8 | 5 | 6 | 2 | 7 | 2 | 7 |
| Magnesium Oxide | - | 2 | | | 2 | 3 | 2 | 3 | - | | 4 | 2 | 9 | 2 |
| Basalt | - | 2 | - | 3 | 5 | 2 | | - | | | | | 3 | 4 |
| Tricalcium phosphate | 2 | - | | 2 | 1.5 | 2 | - | 2 | | 4 | | - | 3 | - |
| Bismuth Sulfide | - | - | - | 3 | | - | - | 4 | 3 | 4 | 2.5 | 3 | 2 | 4 |
| Iron Sulfide | 3 | 4 | - | - | | 4 | 4 | - | | 4 | - | - | 4 | 4 |
| Zirconium Silicate | 4 | 2 | 2.5 | - | | 2 | | 3 | 3 | - | 2 | 3 | - | 2 |
| Sodium Molybdate | 1.5 | - | - | 2 | 2 | 2 | 2 | 2 | 3 | - | 1 | - | 4 | 2 |
| Calcium Fluoride | 2 | 2 | 2 | - | - | - | - | 2 | 3 | - | 3 | 2 | 1.5 | - |
| Manganese Sulfide | | 3 | | - | - | 3 | 2 | - | | 5 | | 2 | - | - |
| Copper | - | - | - | - | - | - | - | - | - | - | 0.5 | - | - | - |
| Aluminum oxide | 1 | 2.5 | 1 | 2 | 2 | 3 | - | 1 | 2 | 3 | 3 | 3 | - | 2 |
| Chromium oxide | 1 | - | 2 | - | 1 | 2 | 2.5 | - | 2 | - | 1 | - | 1 | - |
| Iron chromite | 3 | 3.5 | - | 4 | - | - | - | 3 | - | 3 | - | - | - | 2 |
| *All of the values in the table are weight percent unless otherwise stated. | | | | | | | | | | | | | | |

The above are tested for meeting the following four requirements: (1) performance, (2) wear life, (3) brake torque variation, and (4) noise. Each of the friction materials passed each of these three tests.

As used herein, unless otherwise stated, the teachings envision that any member of a genus (list) may be excluded from the genus; and/or any member of a Markush grouping may be excluded from the grouping.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01, or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the of a range in terms of "at least 'x' parts by weight of the resulting composition" also contemplates a teaching of ranges of same recited amount of "x" in percent by weight of the resulting composition."

The components express their composition in a percent by weight. Even through the compositions do not express a relative ratio between components such ratios are within the scope of the teachings. By way of example, if element A is in an amount of about 10 percent by weight and element B is in an amount of about 2 percent by weight of the total composition the teachings herein contemplate a ratio of about 5:1 for A to B. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist of, or consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

## Claims

1. A friction material comprising:
a. at least one metal containing constituent, wherein the at least one metal containing constituent includes a ferrous metal;
b. one or more lubricating components present in an amount from about 2 to about 30 percent by weight of the friction material, the one or more lubricating components including:
one or more lubricants that are a non-carbonaceous lubricant and
i. a molybdate or an alkali metal molybdate;
ii. a tungsten containing compound;
iii. a zinc sulfide;
iv. a fluoride and metal containing compound;
v. alkali earth metals which are magnesium, calcium, or both that are combined with a phosphate, sulfate, or both;
vi. or a combination of (i) through (v);
c. one or more filler materials;
d. optionally at least one processing aid;
e. an organic binder; and
wherein the friction material is free of asbestos and substantially devoid of copper.

2. The friction material of claim 1 or claim 2, wherein the one or more lubricating components includes a carbon lubricant that is present in an amount from about 3 to about 25 percent by weight of the friction material.

3. The friction material of any of the preceding claims, wherein the zinc sulfide is present in an amount from about 0.5 to about 6 percent by weight of the friction material.

4. The friction material of any of the preceding claims, wherein the fluoride and metal containing compound is calcium fluoride or potassium aluminum fluoride is present in an amount from about 0.2 to about 7 percent by weight of the friction material.

5. The friction material of any of the preceding claims, wherein the tungsten containing compound is a tungstate, or an alkali metal tungstate is present in an amount from about 0.2 to about 7 percent by weight of the friction material.

6. The friction material of any of the preceding claims, wherein the one or more lubricating components includes the molybdate or the alkali metal molybdate; zinc sulfide; and calcium fluoride or potassium aluminum fluoride.

7. The friction material of claim 6, wherein the molybdate or the alkali metal molybdate are present in an amount from about 0.2 to about 7 percent by weight of the friction material; the zinc sulfide is present in an amount from about 0.5 to about 5 percent by weight of the friction material; and the calcium fluoride and/or potassium aluminum fluoride are present in an amount from about 0.2 to about 6 percent by weight of the friction material.

8. The friction material of any of the preceding claims, wherein the organic binder has less than 1 percent by weight of free phenol and is substantially free of antimony, titanium dioxide, ceramic fiber filler, or a combination thereof and the organic binder is substantially free of formaldehyde.

9. The friction material of any of the preceding claims, wherein the one or more fillers are an organic filler, an inorganic filler, or both.

10. The friction material of any of the preceding claims, wherein the friction material is free of titinates.

11. The friction material of claim 9, wherein the one or more fillers are a titanate.

12. The friction material of any of the preceding claims, wherein the ferrous metal is steel and the steel is in the form of powder, fibers, or both and the steel is present in an amount from about 5 to about 40 percent by weight of the friction material.

13. The friction material of claim 1, wherein the friction material includes micro-particulate materials that are a phosphate, a silicate, zinc, zinc aluminum orthophosphate hydrate, zinc orthophosphate hydrate, a zinc calcium strontium aluminum orthophosphate silicate hydrate, a zinc phosphomolydbate, or a combination thereof.

14. The friction material of any of the preceding claims, wherein the at least one processing aid is present in an amount from about 0.5 to about 7 percent by weight of the friction material.

## Patentansprüche

1. Reibwerkstoff, umfassend:
a. mindestens einen metallhaltigen Bestandteil, wobei der mindestens eine metallhaltige Bestandteil ein eisenhaltiges Metall enthält;
b. eine oder mehrere Schmierkomponenten, die in einer Menge von etwa 2 bis etwa 30 Gewichtsprozent des Reibwerkstoffs vorliegen, wobei der eine oder die mehreren Schmierkomponenten Folgendes enthalten: ein oder mehrere Schmiermittel, die nicht Kohlenstoff-haltig sind und
i. ein Molybdat oder Alkalimetallmolybdat;
ii. eine wolframhaltige Verbindung;
iii. ein Zinksulfid;
iv. eine fluorid- und metallhaltige Verbindung;
v. Erdalkalimetalle, die sind Magnesium, Calcium oder beides und kombiniert mit einem Phosphat, Sulfat oder beidem;
vi**.** oder eine Kombination von (i) bis (v);
c. einen oder mehrere Füllstoffe;
d. gegebenenfalls mindestens ein Verarbeitungshilfsmittel;
e. ein organisches Bindemittel; und
wobei der Reibwerkstoff frei von Asbest und weitestgehend ohne Kupfer ist.

2. Reibwerkstoff nach Anspruch 1 oder nach Anspruch 2, wobei die eine oder die mehreren Schmierkomponenten ein Kohlenstoffschmiermittel enthalten, das in einer Menge von etwa 3 bis etwa 25 Gewichtsprozent des Reibwerkstoffs vorliegt.

3. Reibwerkstoff nach einem der vorhergehenden Ansprüche, wobei das Zinksulfid in einer Menge von etwa 0,5 bis etwa 6 Gewichtsprozent des Reibwerkstoffs vorliegt.

4. Reibwerkstoff nach einem der vorhergehenden Ansprüche, wobei es sich bei der fluorid- und metallhaltigen Verbindung um Calciumfluorid oder Kaliumaluminiumfluorid handelt, in einer Menge von etwa 0,2 bis etwa 7 Gewichtsprozent des Reibwerkstoffs vorliegt.

5. Reibwerkstoff nach einem der vorhergehenden Ansprüche, wobei es sich bei der wolframhaltigen Verbindung um ein Wolframat oder ein Alkalimetallwolframat handelt, in einer Menge von etwa 0,2 bis etwa 7 Gewichtsprozent des Reibwerkstoffs vorliegt.

6. Reibwerkstoff nach einem der vorhergehenden Ansprüche, wobei die eine oder die mehreren Schmiermittelkomponenten das Molybdat oder das Alkalimetallmolybdat; Zinksulfid; und Calciumfluorid oder Kaliumaluminiumfluorid enthalten.

7. Reibwerkstoff nach Anspruch 6, wobei das Molybdat oder das Alkalimetallmolybdat in einer Menge von etwa 0,2 bis etwa 7 Gewichtsprozent des Reibwerkstoffs vorliegen; das Zinksulfid in einer Menge von etwa 0,5 bis etwa 5 Gewichtsprozent des Reibwerkstoffs vorliegt; und das Calciumfluorid und/oder Kaliumaluminiumfluorid in einer Menge von etwa 0,2 bis etwa 6 Gewichtsprozent des Reibwerkstoffs vorliegen.

8. Reibwerkstoff nach einem der vorhergehenden Ansprüche, wobei das organische Bindemittel weniger als 1 Gewichtsprozent freies Phenol aufweist und weitestgehend frei von Antimon, Titandioxid, Füllstoff aus Keramikfasern oder einer Kombination davon ist und das organische Bindemittel weitestgehend frei von Formaldehyd ist.

9. Reibwerkstoff nach einem der vorhergehenden Ansprüche, wobei es sich bei dem einen oder den mehreren Füllstoffen um einen organischen Füllstoff, einen anorganischen Füllstoff oder beides handelt.

10. Reibwerkstoff nach einem der vorhergehenden Ansprüche, wobei der Reibwerkstoff frei von Titanaten ist.

11. Reibwerkstoff nach Anspruch 9, wobei es sich bei dem einen oder den mehreren Füllstoffen um ein Titanat handelt.

12. Reibwerkstoff nach einem der vorhergehenden Ansprüche, wobei es sich bei dem eisenhaltigen Metall um Stahl handelt und der Stahl in Form von Pulver, Fasern oder beidem vorliegt und der Stahl in einer Menge von etwa 5 bis etwa 40 Gewichtsprozent des Reibwerkstoffs vorliegt.

13. Reibwerkstoff nach Anspruch 1, wobei der Reibwerkstoff mikropartikuläre Werkstoffe enthält, bei denen es sich um ein Phosphat, ein Silikat, Zink, Zink-Aluminiumorthophosphathydrat, Zinkorthophosphathydrat, ein Zink-Calcium-Strontium-Aluminumorthophosphatsilikathydrat, ein Zinkphosphomolybdat oder eine Kombination davon handelt.

14. Reibwerkstoff nach einem der vorhergehenden Ansprüche, wobei das mindestens eine Verarbeitungshilfsmittel in einer Menge von etwa 0,5 bis etwa 7 Gewichtsprozent des Reibwerkstoffs vorliegt.

## Revendications

1. Matériau de friction comprenant :
a. au moins un constituant contenant un métal, l'au moins un constituant contenant un métal comportant un métal ferreux ;
b. un ou plusieurs composants lubrifiants présents en une quantité d'environ 2 à environ 30 pour cent en poids du matériau de friction, le ou les composants lubrifiants comportant :
un ou plusieurs lubrifiants qui sont un lubrifiant non carboné et
i. un molybdate ou un molybdate de métal alcalin ;
ii. un composé contenant du tungstène ;
iii. un sulfure de zinc ;
iv. un composé contenant un fluorure et un métal ;
v. des métaux alcalino-terreux qui sont le magnésium, le calcium, ou les deux qui sont combinés avec un phosphate, un sulfate ou les deux ;
vi. ou une combinaison de (i) à (v) ;
c. un ou plusieurs matériaux de charges ;
d. éventuellement au moins un auxiliaire de traitement ;
e. un liant organique ; et
le matériau de friction étant exempt d'amiante et sensiblement dépourvu de cuivre.

2. Matériau de friction selon la revendication 1 ou la revendication 2, le ou les composants lubrifiants comportant un lubrifiant carboné qui est présent en une quantité d'environ 3 à environ 25 pour cent en poids du matériau de friction.

3. Matériau de friction selon l'une quelconque des revendications précédentes, le sulfure de zinc étant présent en une quantité d'environ 0,5 à environ 6 pour cent en poids du matériau de friction.

4. Matériau de friction selon l'une quelconque des revendications précédentes, le composé contenant un fluorure et un métal étant le fluorure de calcium ou le fluorure de potassium et d'aluminium est présent en une quantité d'environ 0,2 à environ 7 pour cent en poids du matériau de friction.

5. Matériau de friction selon l'une quelconque des revendications précédentes, le composé contenant du tungstène étant un tungstate, ou un tungstate de métal alcalin est présent en une quantité d'environ 0,2 à environ 7 pour cent en poids du matériau de friction.

6. Matériau de friction selon l'une quelconque des revendications précédentes, le ou les composants lubrifiants comprenant le molybdate ou le molybdate de métal alcalin ; le sulfure de zinc ; et le fluorure de calcium ou le fluorure de potassium et d'aluminium.

7. Matériau de friction selon la revendication 6, le molybdate ou le molybdate de métal alcalin étant présent en une quantité d'environ 0,2 à environ 7 pour cent en poids du matériau de friction ; le sulfure de zinc étant présent en une quantité d'environ 0,5 à environ 5 pour cent en poids du matériau de friction ; et le fluorure de calcium et/ou le fluorure de potassium et d'aluminium étant présent(s) en une quantité d'environ 0,2 à environ 6 pour cent en poids du matériau de friction.

8. Matériau de friction selon l'une quelconque des revendications précédentes, le liant organique possédant moins de 1 pour cent en poids de phénol libre et étant sensiblement exempt d'antimoine, de dioxyde de titane, de charge de fibre de céramique, ou d'une combinaison correspondante et le liant organique étant sensiblement exempt de formaldéhyde.

9. Matériau de friction selon l'une quelconque des revendications précédentes, la ou les charges étant une charge organique, une charge inorganique, ou les deux.

10. Matériau de friction selon l'une quelconque des revendications précédentes, le matériau de friction étant exempt de titanates.

11. Matériau de friction selon la revendication 9, la ou les charges étant un titanate.

12. Matériau de friction selon l'une quelconque des revendications précédentes, le métal ferreux étant l'acier et l'acier étant sous la forme de poudre, de fibres, ou des deux et l'acier étant présent en une quantité d'environ 5 à environ 40 pour cent en poids du matériau de friction.

13. Matériau de friction selon la revendication 1, le matériau de friction comportant des matériaux microparticulaires qui sont un phosphate, un silicate, du zinc, de l'hydrate d'orthophosphate de zinc et d'aluminium, de l'hydrate d'orthophosphate de zinc, un hydrate de silicate orthophosphate de zinc calcium strontium et aluminium, un phosphomolybdate de zinc, ou une combinaison correspondante.

14. Matériau de friction selon l'une quelconque des revendications précédentes, l'au moins un auxiliaire de traitement étant présent en une quantité d'environ 0,5 à environ 7 pour cent en poids du matériau de friction.
